Europäisches Patentamt

European Patent Office

Office européen des brevets

(11) Publication number : **0 573 252 A2**

# EUROPEAN PATENT APPLICATION

(21) Application number : 93304237.6

(22) Date of filing : 01.06.93

(51) Int. Cl.⁵ : **G06F 15/40**

(30) Priority : 01.06.92 US 892534

(43) Date of publication of application :
08.12.93 Bulletin 93/49

(84) Designated Contracting States :
DE FR GB

(71) Applicant : **HEWLETT-PACKARD COMPANY**
3000 Hanover Street
Palo Alto, California 94304-1181 (US)

(72) Inventor : **Krishnamurthy, Ravi**
10110 Parkwood Drive No.1
Cupertino, California 95014 (US)
Inventor : **Hasan, Waqar**
777 Hollenbeck Avenue No.8H
Sunnyvale, California 94087 (US)
Inventor : **Ganguly, Sumit**
4605 Avenue A. No.214
Austin, Texas 78761 (US)

(74) Representative : **Williams, John Francis et al**
WILLIAMS, POWELL & ASSOCIATES 34
Tavistock Street
London WC2E 7PB (GB)

(54) **Method of minimizing response time to access database.**

(57)    Providing a method to minimize the response time of a computerized database system (100) to solve a problem (10). The database system (100) has more than one resource (102, 104, 106, 108) that are capable of running in parallel. The problem (10) is divided into sub-problems (10, 11, 12, 13, 15, 17, 19) which are arranged into a hierarchy of levels (1, 2, 3). Each sub-problem (11, 12, 13) in a first level (1) requires that data be retrieved from a storage resource (106, 108) ; each sub-problem (10, 15, 17, 19) in a higher level (2, 3) requires that a result from a sub-problem in a lower level be manipulated in a computation resource (102, 104). All the sub-plans (20, 22, 50, 52) that could solve each sub-problem (11, 15) are identified. Delete every sub-plan (22, 50) that requires more time from each of the resources (102, 104, 106, 108) than is required by another sub-plan (20, 52) in solving the same sub-problem (11, 15) . A response time is computed for each possible combination of the remaining sub-plans that would solve the problem (10) ; the combination having the lowest response time is selected as the optimal plan (60). Preferably, the invented method deletes sub-plans that requires the system to perform too much extra work in minimizing response time. The invented method can be used to solve a class of problem known as select-project-join query.

EP 0 573 252 A2

The present invention relates generally to computerized database systems and more particularly to a method of minimizing the time to retrieve data from a database system having a plurality of resources capable of running in parallel.

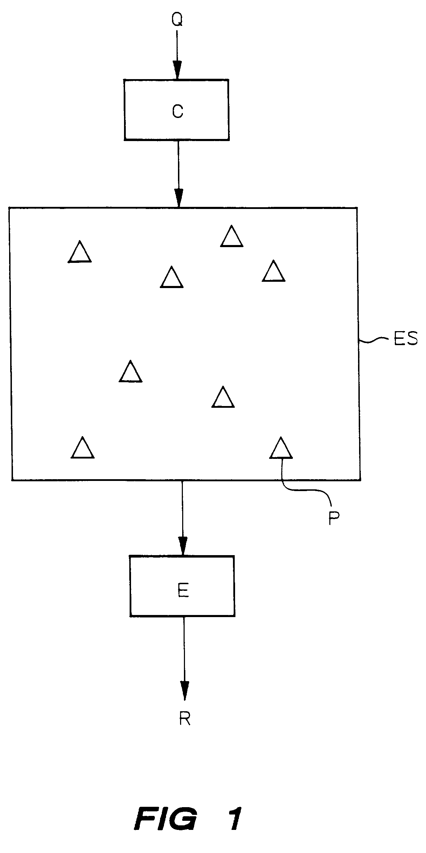

A resource in a computerized database system is defined to be a functional unit in the system. A typical database system has at least two resources, a central processing unit (CPU) and a storage medium such as a magnetic disk. The response time of the database system is the time between asking the system to solve a problem and getting a result of the problem from the system. Figure 1 provides an outline of a sequence of logical steps carried out in a database system in the course of salving a problem. A problem is presented in the form of a query Q to be executed. The query Q is presented to a compiler/optimizer C. Based on some criteria, the compiler/optimizer selects a plan P from an execution space Es that comprises all the possible plans for executing the query. The selected plan is executed (block E) to provide a response R.

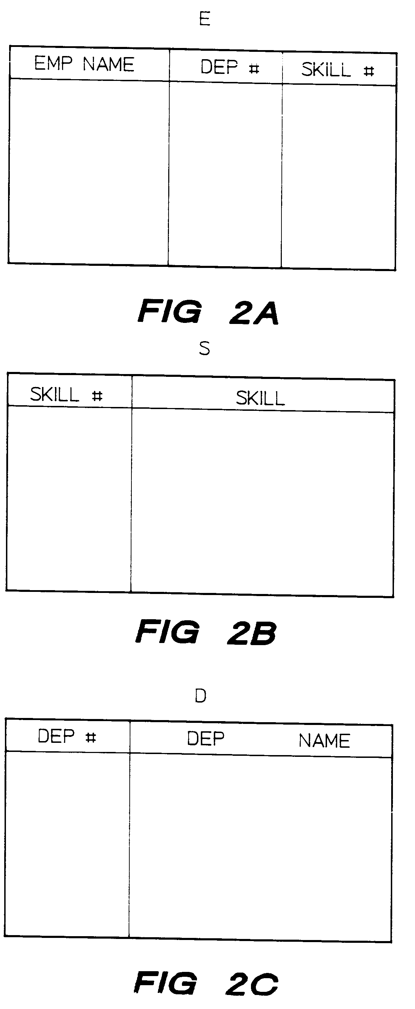

A problem to be solved in a database system might be: combine three tables of the kind shown in Figure 2; namely, an employee table E which has names of the employees mapped against the department numbers where the employees work and against the skill numbers indicating the skills or the employees; a skill table S which has skill numbers mapped against descriptions of the skills; and a department table D which has department numbers mapped against the names of the departments.

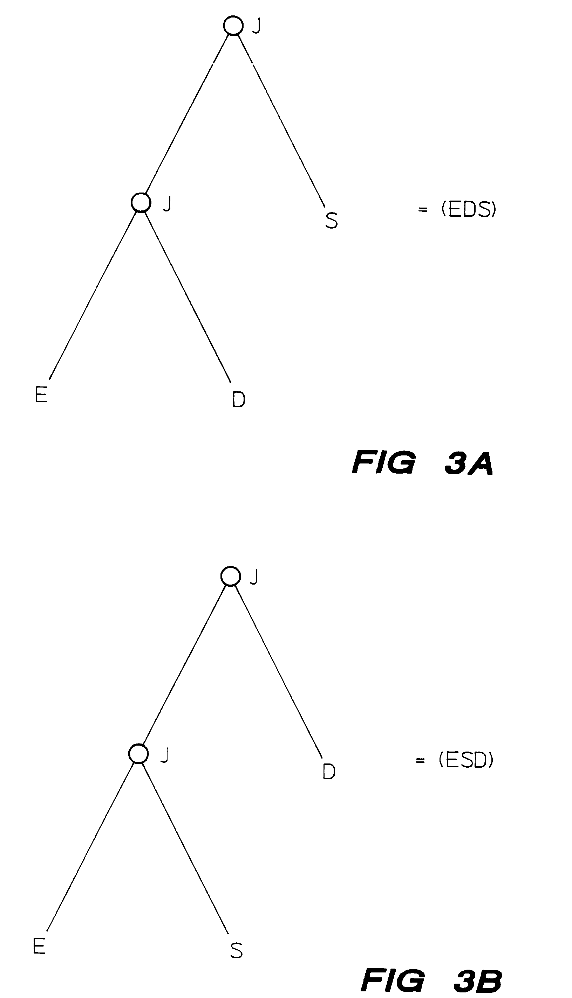

Figures 3A and 3B show two different plans to solve the problem; the two plans solve the same problem but in a different order. "J" means joining tables together. As shown in Figure 3A, the first plan joins the employed table E with the department table D and then joins the result with the skill table S; due to the order, the plan can be represented as (EDS). The second plan, shown in Figure 3B, joins the employee table E with the skill table S and than joins the result with the department table D; the plan can be represented as (ESD). Based on some criteria, either the first or the second plan is selected as the optimal plan to solve the problem.

As the number of tables required to solve a problem increases, the number of possible plans to join the tables increases, which in turn significantly increases the amount of time needed to find the optimal plan. A technique known as "dynamic programming" tremendously reduces the amount of time required to find the optimal plan. In dynamic programming, a problem is divided into a plurality of sub-problems. Multiple occurrences of any sub-problem are identified, and a solution if computed only upon the first occurrence of the sub-problem. This solution is then re-used each time the same sub-problem recurs. This re-use or solutions drastically reduces the number of plans that are required to be compared which in turn significantly reduces the amount or time required to find the optimal plan. A general discussion of dynamic programming can be found in Bellman, Dynamic Programming, Princeton University Press, 1957.

Selecting the optimal plan to solve a database query had usually been based on the criterion or minimizing the workload that the query imposes on the various resources (CPU, disk storage, and the like) of the computer. The magnitude of this workload has generally been expressed as the sum of the lengths of time that each resource is kept busy solving the query. Thus, if a given plan requires 10 seconds of disk time and 5 seconds of CPU time, the total "work" or total computing time required to solve the query according to this plan is defined as 15 seconds. When comparing different plans, the total work which each plan would require is calculated. That plan which requires the least work from the computer system is thereupon selected as the optimum plan.

One method of finding that plan which requires the least work is known as the "greedy algorithm". A general discussion of the greedy algorithm can be found in Cormen et al., Introduction to Algorithms, McGraw-Hill, 1990. A discussion of using the greedy algorithm to minimize the total work required to solve a problem can be found in Apers et al., "Optimization Algorithms for Distributed Queries", IEEE Transactions on Software Engineering, 9(1), 1983.

Other methods of selecting a plan according to the criterion of minimizing the total work are described by Hong et al., "Optimization of Parallel Query Execution Plans in xprs", Proceedings of the First International Conference on Parallel and Distributed Information Systems, December, 1991, and Selinger et al., "Access Path Selection in a Relational Database Management System", Proceedings of ACM-SIGMOD International Conference on Management of Data, 1979.

A variation of selecting a plan by minimizing the work is selecting a plan by maximizing throughput within a preset response time. This method has found an application in some automatic teller machine ("ATM") networks. Such a network tries to maximize the number of transactions that can be performed by the machines during a given time period. One way of doing this is to limit the number of transactions being processed at any given time to that number which will assure that each transaction can be completed within the preset response time. Another way is to delay the individual transactions until a predetermined quantity of transactions have been accumulated, and then process them all at once; this tends to make the most efficient usage of the system at the expense of increasing the response time of the first few transactions.

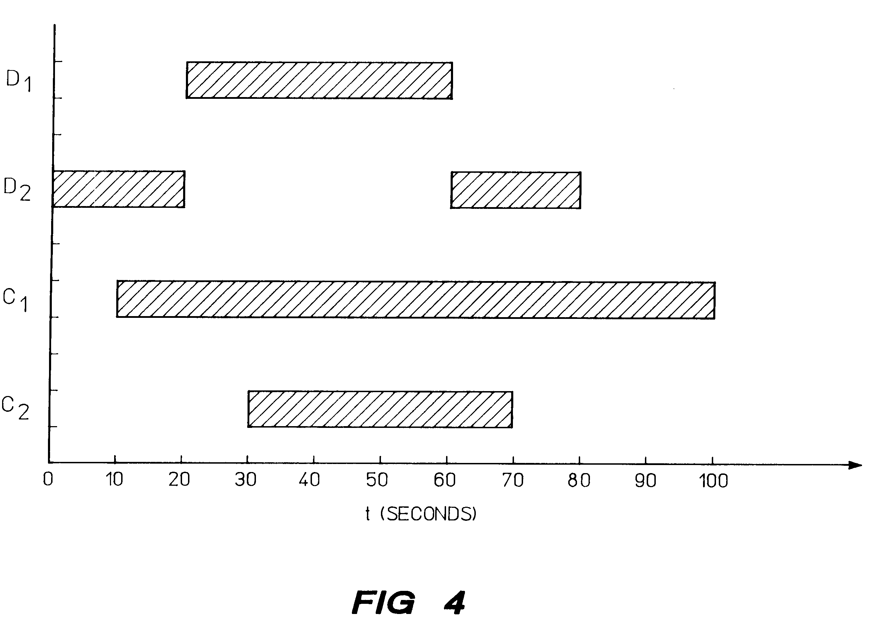

If only one resource of a computer system can be in operation at any given moment, than selecting a plan that minimizes the total work can usually be expected to also provide that plan which minimizes the response time. However, for a computer system with a plurality of resources capable of running in parallel, requiring the least amount of total working time of all the resources is typically not the same as minimizing the response time. For example, consider a computer system having two disk storage units $D_1$ and $D_2$ and two CPUs $C_1$, and $C_2$, Figure 4 depicts the workload imposed on each of these resources in order to carry out one possible plan to solve a problem. Hashed areas indicate time periods when a resource is working on the problem; $D_1$, $D_2$, and $C_1$, each requires 40 seconds, and $C_2$ requires 90 seconds. The total time requited by all these resources is 210 seconds, but the response time is only 100 seconds because several of the resources perform their work in parallel.

It can be seen that a plan which would reduce the work done by the processor $C_2$ from 40 to 10 seconds would reduce the total work by 30 seconds but would have no effect on the response time. Conversely, a plan that would reduce the work done by the processor $C_1$ from 90 to 70 seconds would reduce the system response time by 20 seconds. Thus, in situations where the response time must be minimized, the latter plan would be preferable even though the former plan would achieve the greater reduction in total system workload.

It will be seen from the foregoing that there is a need for a method of minimizing the response time required to solve a problem in a computerized database system that has a plurality of resources operating in parallel.

The present invention provides a method of minimizing the response time of a computerized database system to solve a problem. The database system has a plurality of resources, such as storage resources and computation resources, that are capable of running in parallel.

Briefly and in general terms, the method provided by the present invention includes the following steps, all of which are carried out automatically by the computer under software control. A problem is divided into a plurality of sub-problems. The sub-problems are arranged hierarchically in a plurality of level.; each sub-problem in a first level requires that data be retrieved from a storage resource of the computer, and each sub-problem in the remaining levels requires that a result from a sub-problem in a lower level be manipulated in a computation resource of the computer.

All sub-plans that could be used to solve each sub-problem are identified. If any sub-problem in the first layer has more than one associated sub-plan, any such associated sub-plan is deleted if solving it would require more time from each of the resources than solving another of the associated sub-plans.

In one embodiment, each sub-problem in any level above the first requires both a result from a sub-problem in the level immediately below and a result from a sub-problem in the first level. Each sub-plan, associated with a sub-problem in a level other than the first level, also requires a result from a sub-problem in the immediate lower level and a result from a sub-problem in the first level to be manipulated in a computation resource.

In another embodiment, each sub-problem in any level above the first requires results from two lower-level sub-problems. Each sub-plan, associated with a sub-problem in a level other than the first level, also requires results from two lower-level sub-problems to be manipulated in a computation resource.

In one embodiment, the step of deleting sub-plans is repeated for sub-problems in levels above the first.

Then, the amount of time it would take for the computer to solve the problem according to each possible combination of the remaining sub-plans is computed, and whichever combination gives the best response time is selected as the optimal plan.

In an alternate embodiment, the invented method either limits the maximum throughput the system may be allowed to degrade or limits the amount of extra work required to reduce the response time. Any sub-plan that goes above the limit is deleted.

Other aspects and advantages of the present invention will become apparent from the following detailed description, taken in conjunction with the accompanying drawings, illustrating by way of example the principles of the invention.

Figure 1 shows a sequence of steps for a database system to solve a problem.

Figure 2 shows three tables used in a database system.

Figure 3 shows two ways to combine the three tables in Figure 2.

Figure 4 illustrates the times required by different resources operating in parallel to solve a problem.

Figures 5A-B show two plans to solve a problem.

Figures 6A-B illustrate how the invented method optimizes response time in solving a problem.

Figure 7A shows a plurality of resources in a database system that can be used by the invented method to solve a problem.

Figure 7B shows a first preferred embodiment of the invented method in solving a problem.

Figure 8 shows a "select" operation of a select-project-join-query.

Figure 9 shows a "project" operation of a select-project-join-query.

Figure 10 shows a "join" operation of a select-project-join-query.

Figure 11 shows part of a second preferred embodiment of the invented method in solving a problem.

The present invention provides a method of minimizing the response time of a computerized database system in solving a problem. The database system has more than one resource that are capable of running in parallel. Instead of minimizing the total computing time of the resources to solve the problem, the invented method minimizes the response time to solve the problem.

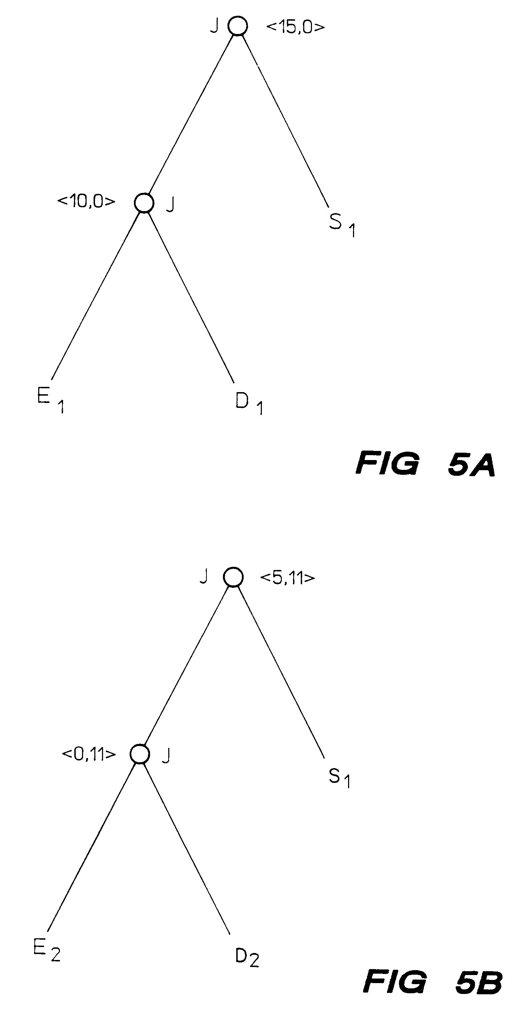

Figures 5A-B show an example of using the invention in solving a problem of joining three tables, E, D, and S, together. A subscript one designates that the tables reside in a first resource and a subscript two designates that the tables reside in a second resource. The first resource holds all three tables, while the second resource only holds tables E and D.

Figure 5A shows that the first resource needs 10 time units to join tables E and D together and another 5 time units to join the combined table with table S. With all the work done by one resource, 15 time units are required before getting the result; in other words, the response time of solving the problem is 15 time units.

Figure 5B shows that the second resource needs 11 time units to join tables E with D, and the first resource needs 5 time units to join table S with the combined table. All the resources can run in parallel so, though using 16 time units to solve the problem by the two resources, only 11 time units are required to get the result; in other words, the response time of solving the problem is 11 time units.

In prior art systems, after combining tables E and D, the plan in Figure 5B would be deleted because the operation in Figure 5B needs 11 time units which is more than the time needed in the operation in Figure 5A by 1 time unit. The present invention, with the two plans running in two different resources, keeps the two plan although one plan physically takes longer than the other. As shown in the example, with more than one resource working on a problem, less time to finish a sub-plan in one resource over the other does not necessarily lead to less response time to finish the whole plan.

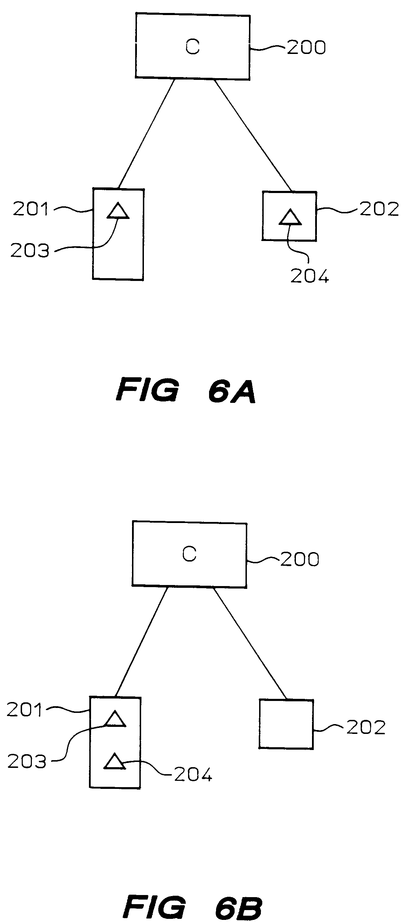

Figures 6A-B illustrate another example of how the invented method selects a plan to optimize response time in solving a problem. Figure 6A shows two sub-plans to solve the problem, each sub-plan using one resource; sub-plan 203 uses resource 201 and sub-plan 204 uses resource 202. Resource 201 needs 5 time units to solve sub-plan 203 while resource 202 needs 6 time units to solve sub-plan 206. The two resources run in parallel giving the operator the result of the problem in 6 time units. So the response time of the system is 6 time units while the total computing time is 11 time units.

Figure 6B shows the two sub-plans 203 and 204, both using resource 201 to solve the problem. Again resource 201 needs 5 time units to solve sub-plan 203 but resource 201 only needs 4 time units to solve sub-plan 204. So the response time of the system in solving the problem and the total computing time are both 9 time units.

In prior art systems, the sub-plans in Figure 6B would be selected because they need 9 time units, 2 less than the sub-plans in Figure 6A. However, this invention selects the plan in Figure 6A because they give the result in 6 time units, 3 less than the sub-plans in Figure 6B. Optimizing response time often selects a different plan to solve a problem than optimizing total computing time.

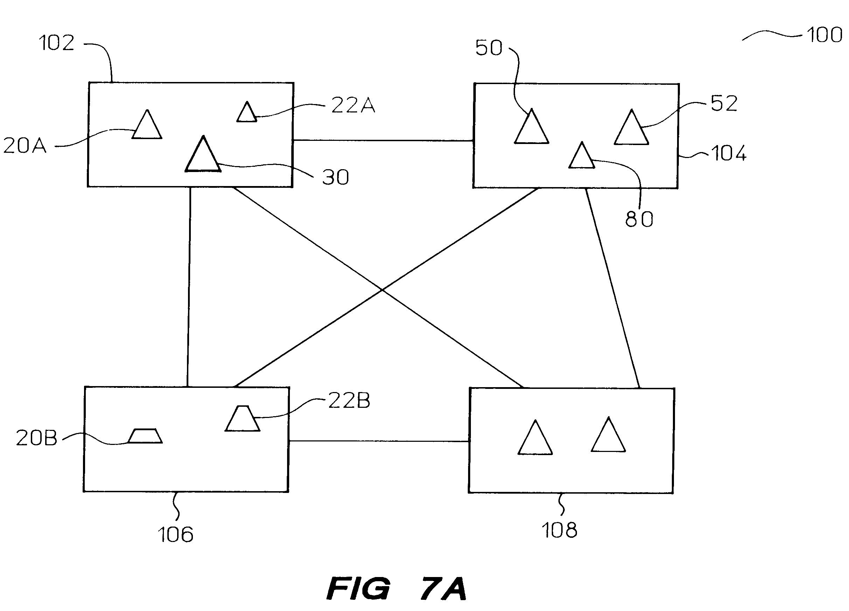

Figure 7A shows a computerized database system 100 to be used by the invented method. The database system 100 has more than one resource; 102 and 104 are computation resources; 106 and 108 are disk storage resources; all the resources are capable of running in parallel.

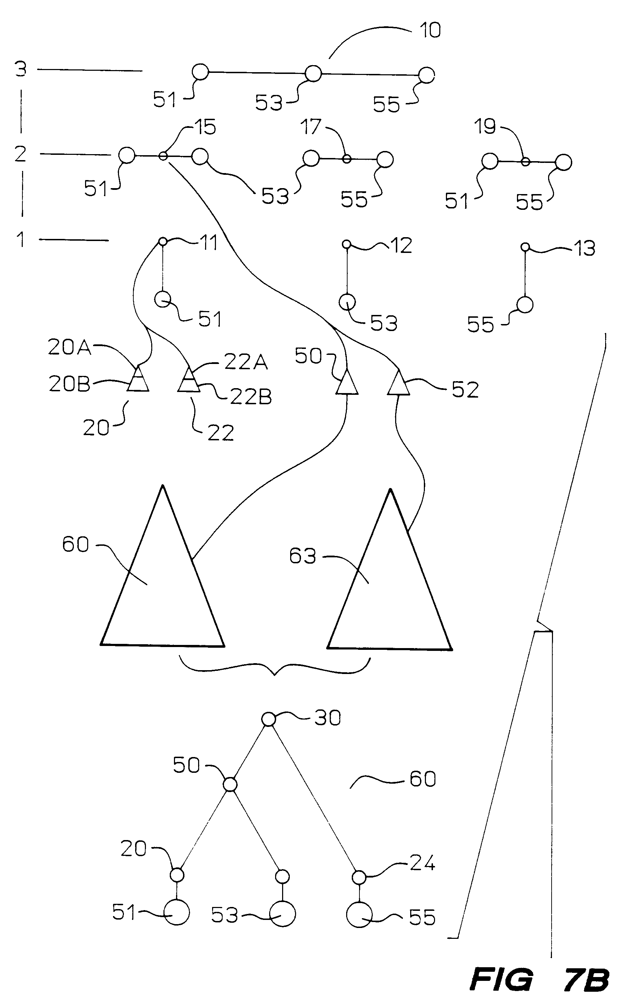

Figure 7B shows schematically a first preferred embodiment of the invented method. The invented method first divides the problem 10 into a plurality of sub-problems 10-13, 15, 17, and 19, with the problem 10 also being treated as a sub-problem; then the sub-problems are arranged hierarchically in a plurality of levels; such as levels 1, 2, and 3. Each sub-problem in a first level requires that data, like tables of information, be retrieved from a storage resource; for example, sub-problem 11 requires that data 51 be retrieved from a storage resource such as resource 106 in Figure 7A. Each sub-problem in a higher level requires that a result from a sub-problem in a lower level be manipulated in a computation resource; for example, sub-problem 15 requires that a result from sub-problem 11 be manipulated in the computation resource 104.

All the sub-plans that could be used to solve each sub-problem are identified; for example, sub-plans 20 and 22 are identified for sub-problem 11. Note that sub-plan 20 is divided into two sub-sub-plans 20A and 20B; sub-plan 22 is also divided into two sub-sub-plans 22A and 22B.

For every sub-problem in the first layer with more than one sub-plan, delete every sub-plan that requires more time from each of a plurality of the computer resources than by another sub-plan in solving the same sub-problem. For example, if the storage resource 106 takes longer time to run sub-sub-plan 22B than to run 20B and the computation resource 102 takes longer time to run sub-sub-plan 22A than to run 20A, then sub-plan 22 is deleted. Preferably, repeat this procedure hierarchically to all the other levels of the sub-problems; for example, if the computation resource 104 takes longer time to run sub-plan 50 than to run sub-plan 52, then sub-plan 50 will be deleted.

A response time is computed for each possible combination of the remaining sub-plans, such as plans 60 and 63, that would solve the problem; the combination which has the lowest response time is selected as the optimal plan. In the example as shown, plan 60 is selected.

In the first preferred embodiment, each sub-problem, with its associated sub-plans, to a level other than the first level of the sub-problem, requires that a result from a sub-problem in the immediate lower level and a result from a sub-problem in the first level be manipulated in a computation resource; for example, sub-problem 10, with its associated sub-plan 30 requires that the result of sub-problem 15, which is a sub-problem in the immediate lower level, and the result of sub-problem 13, which is a sub-problem in the first level, be manipulated in computation resource 102.

The invented method for selecting an optimal plan finds an application in solving a class of problems known as select-project-join queries.

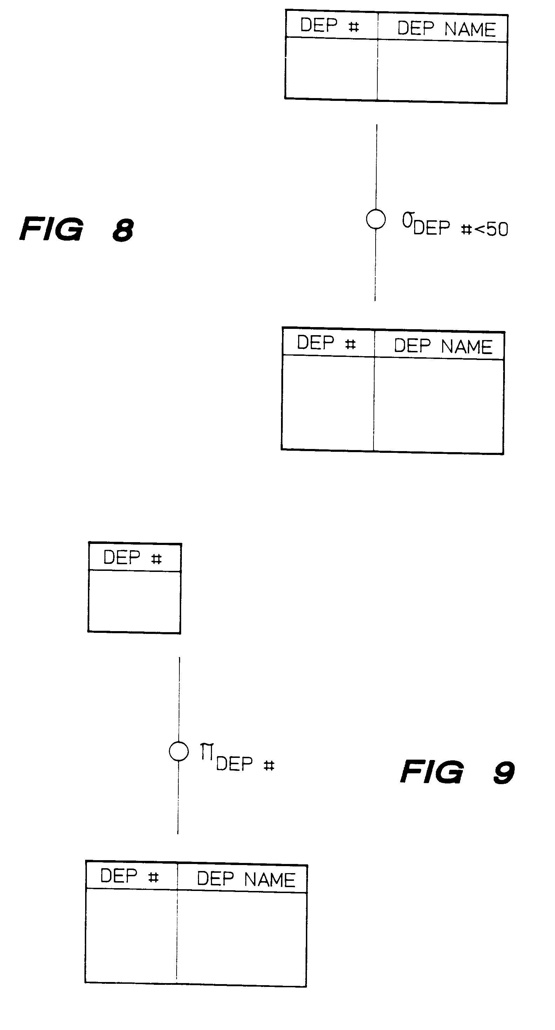

Figure 8 describes the "select" operation which selects certain rows in a table; for example, all the departments with number less than 50 can be selected from the department table to form a new department table.

Figure 9 shows the "project" operation which forms a projection of certain columns in a table; for example, all the department numbers can be projected from the department table to form a new table with just department numbers.

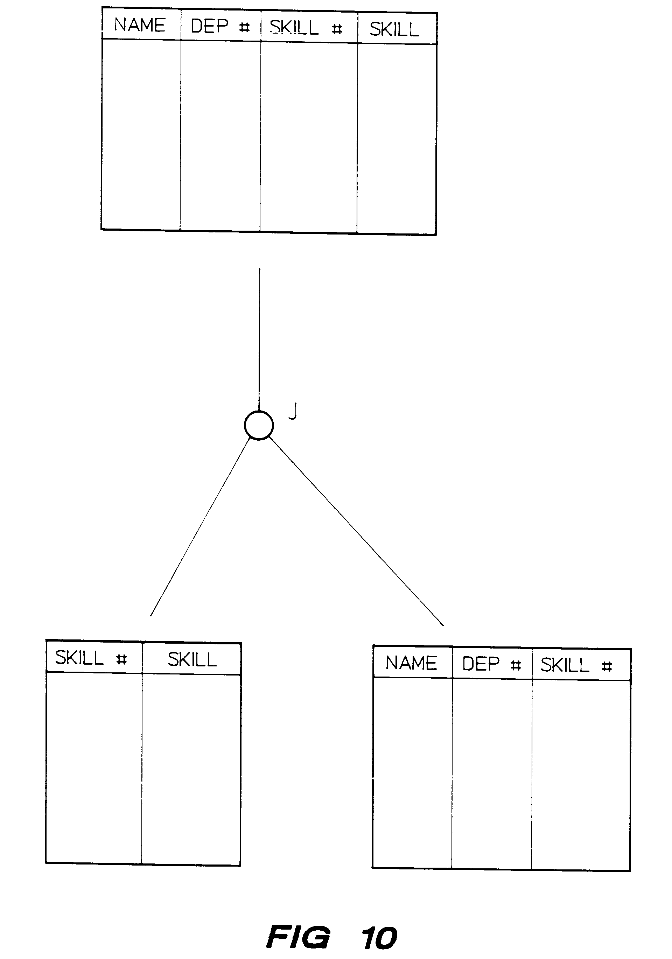

Figure 10 shows the "coin" operation which joins two tables to form a new table; for example, the skill table can be joined with the employee table to form a new table.

Each sub-plan solving a sub-problem of the first layer performs tasks such as "scan", "select", and "project." "Scan" means retrieving a table of data. Each sub-plan solving a sub-problem in a layer other than the first layer performs tasks such as "select", "project", and "join."

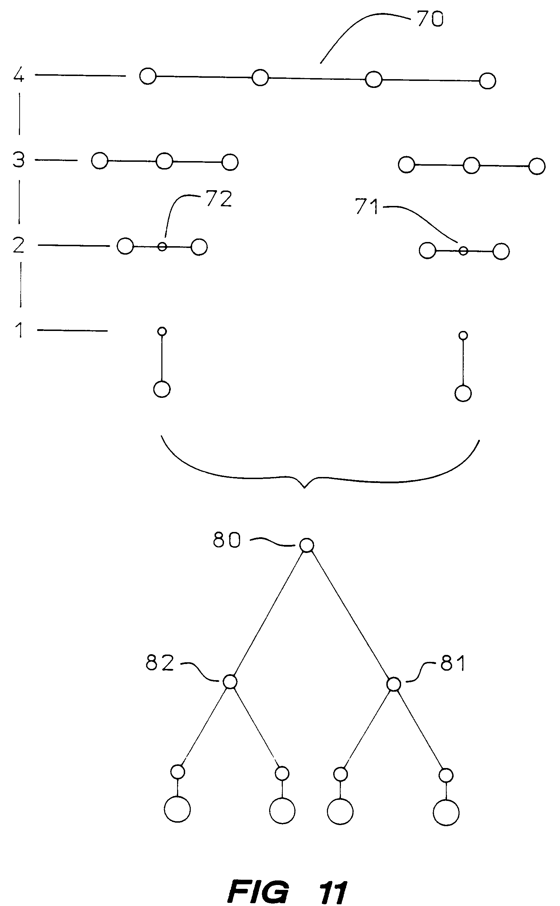

A second preferred embodiment is similar to the first preferred embodiment except that each sub-problem, with its associated sub-plans, to a level other than the first level, require that results from two sub-problems in two lower levels be manipulated in a computation resource. Referring to Figure 11, sub-problem 70, with its associated sub-plan so, require that results from sub-problems 72 and 71, which are in a lower level, be manipulated in computation resource 104 in Figure 7A.

In an alternate embodiment, the invented method either limits the maximum throughput the system may be allowed to degrade or limits the maximum amount of extra work required to reduce the response time. Any sub-plan that goes above the limit is deleted.

In this embodiment, the total computing time, $W_0$, that the system needs to solve the problem with the system performing minimal amount or total work, is calculated. A factor F indicating the maximum throughput that the system may be allowed to degrade is set; any sub-plan requiring more time to solve than $W_0 * F$ is deleted.

Another way to limit the amount of extra work required by the system to solve the problem is according to the following steps. First, the response time, $T_0$, and the total computing time, $W_0$, that the system needs to solve the problem, with the system performing minimal amount of total work, is calculated; second, a factor F indicating the maximum amount of extra work required to reduce the response time is set; third, for every sub-plan, the response time $T_p$ and the amount of total computing time $W_p$ that the system needs to solve the problem is calculated; and fourth, every sub-plan is deleted if

$$(T_0 - T_p)/(W_p - W_0) < F.$$

A more detailed description of the invention is included in Appendix A hereto.

Although a specific embodiment of the invention has been described and illustrated, the invention is not to be limited to the specific forms or arrangements of parts so described and illustrated, and various modifications and changes can be made without departing from the scope and spirit or the invention. Within the scope of the appended claims, therefore, the invention may be practiced otherwise than as specifically described and illustrated.

## Claims

1. A method of selecting an optimal plan (60) for solving a problem (10) in a computerized database system (100) having a plurality of computer resources (102, 104, 106, 108) that can operate in parallel, the method comprising:

   a. dividing the problem (10) into a plurality of sub-problems (10, 11, 12, 13, 15, 17, 19);

   b. arranging the sub-problems (10, 11, 12, 13, 15, 17, 19) hierarchically in a plurality of levels (1, 2, 3), each sub-problem (11, 12, 13) in a first level (1) requiring that data be retrieved from a storage resource (106, 108) and each sub-problem (10, 15, 17, 19) in a higher level (2, 3) requiring that a result from a sub-problem (11, 12, 13) in a lower level (1) be manipulated in a computation resource (102, 104);

   c. identifying all sub-plans (20, 22, 50, 52) that could be used to solve each sub-problem (11, 15);

   d. deleting, from among the sub-plans (20, 22) associated with any sub-problem (11) in the first level having more than one sub-plan, any sub-plan (22) that requires more time from each of a plurality of the computer resources (102, 106) than is required by another sub-plan (20) in solving the same sub-problem;

   e. computing a response time for each possible combination of the remaining sub-plans (20) that would solve the problem; and

f. selecting that combination which has the lowest response time as the optimal plan (60).

2. A method for selecting an optimal plan (60) as recited in claim 1, the step (d) comprising the step of:

d1. repeating step (d) hierarchically to every level (2, 3) higher than the first level (1) of the sub-problems (11, 12, 13).

3. A method for selecting an optimal plan (60) as recited in claim 2, the step (b) comprising the step of:

b1. retrieving a result from a sub-problem (13) in a first level (1) and a result from a sub-problem (15) in the immediate lower level (2) far each sub-problem (10) in a level other than the first level (1); and

the step (d1) comprising the step of:

d2. requiring, for each sub-plan (30) associated with a sub-problem (10) in a level other than the first level (1), that a result from a sub-problem (15) in the immediate lower level (2) and a result from a sub-problem (13) in the first level (1) to be manipulated in a computation resource (102).

4. A method for selecting an optimal plan as recited in claim 3, wherein the data in step (b) comprise tables of information.

5. A method for selecting an optimal plan as recited in claim 4, wherein the problem comprises a select-project-join query.

6. A method for selecting an optimal plan as recited in claim 2, the step (b) comprising the step of:

b1. retrieving results from two lower-level sub-problems (71, 72) for each sub-problem (70) in a level other than the first level (1); and

the step (d1) comprising the step of:

d2. requiring, for each sub-plan (80) associated to a level (4) other than the first level (1) of the sub-problem, that results from two lower-level sub-problems (72, 71) to be manipulated in a computation resource (104).

7. A method for selecting an optimal plan as recited in claim 6, wherein the data in step (b) are tables of information.

8. A method for selecting an optimal plan as recited in claim 7, wherein the problem is a select-project-join query.

9. A method for selecting an optimal plan as recited in claim 2, the step (c) comprising the steps of:

c1. calculating the total computing time that the system needs to solve the problem with the system performing minimal amount of work;

c2. establishing a factor indicating the maximum throughput that the system may be allowed to degrade; and

the step (d) comprising the step of:

d1. deleting any sub-plans requiring more time to solve than the product of the calculated total computing time and the factor.

10. A method for selecting an optimal plan as recited in claim 2, the steps (c) comprising the step of:

c1. calculating the response time $T_0$ that the system needs to solve the problem with the system performing minimal amount of work;

c2. calculating the total computing time $W_0$ that the system needs to solve the problem with the system performing minimal amount of work;

c2. establishing a factor indicating the maximum amount of extra work required to reduce the response time;

the step (d) comprising the steps of:

d1. calculating, for every sub-plan, the response time $T_p$ and the total computing time $W_p$ that the system needs to solve the problem with the sub-plan; and

d2. deleting every sub-plan If $(T_0 - T_p)/(W_p - W_0) <$ the factor.

FIG 1

E

| EMP NAME | DEP # | SKILL # |
|----------|-------|---------|
|          |       |         |

## FIG 2A

S

| SKILL # | SKILL |
|---------|-------|
|         |       |

## FIG 2B

D

| DEP # | DEP NAME |
|-------|----------|
|       |          |

## FIG 2C

= (EDS)

**FIG 3A**

= (ESD)

**FIG 3B**

*FIG 4*

EP 0 573 252 A2

J ◯ <15,0>

<10,0> ◯ J

S₁

E₁    D₁

**FIG 5A**

J ◯ <5,11>

<0,11> ◯ J

S₁

E₂    D₂

**FIG 5B**

FIG 6A

FIG 6B

FIG 7A

EP 0 573 252 A2

**FIG 7B**

| DEP # | DEP NAME |
|---|---|
|  |  |

**FIG 8**

$\sigma_{DEP\ \#<50}$

| DEP # | DEP NAME |
|---|---|
|  |  |

| DEP # |
|---|
|  |

$\pi_{DEP\ \#}$

**FIG 9**

| DEP # | DEP NAME |
|---|---|
|  |  |

| NAME | DEP # | SKILL # | SKILL |
|------|-------|---------|-------|
|      |       |         |       |

J

| SKILL # | SKILL |
|---------|-------|
|         |       |

| NAME | DEP # | SKILL # |
|------|-------|---------|
|      |       |         |

FIG 10

FIG 11